# EUROPÄISCHE PATENTSCHRIFT

(11) **EP 1 237 362 B1**
(45) Veröffentlichungstag und Bekanntmachung des Hinweises auf die Patenterteilung: **18.02.2004**
(21) Anmeldenummer: 01105364.2
(22) Anmeldetag: 08.03.2001
(51) Int. Cl.: H04N 5/225

(54) **Videokamera und Adapter für eine Videokamera**
Video camera and adapter for a video camera
Caméra vidéo et adaptateur pour caméra vidéo

(30) Priorität: 28.02.2001 DE 10109604
(43) Veröffentlichungstag der Anmeldung: 04.09.2002
(73) Patentinhaber: Gabel, Benjamin, 60431 Frankfurt am Main (DE)
(72) Erfinder: Gabel, Benjamin, 60431 Frankfurt am Main (DE)
(74) Vertreter: Schurack, Eduard F.

(56) Entgegenhaltungen:
- EP-A- 0 950 912
- EP-A- 1 014 705

## Beschreibung

Die vorliegende Erfindung betrifft eine Videokamera mit einem Kameragehäuse, einem ersten Objektiv, durch das Licht von einer aufzunehmenden Szenerie in das Kameragehäuse einleitbar ist, und einem Halbleitersensorfeld, auf dem Licht von der aufzunehmenden Szenerie kumulierbar ist, und einer Projektionsfläche, die derart zum ersten Objektiv angeordnet ist, dass durch das erste Objektiv eingeleitetes Licht auf die Projektionsfläche abgebildet wird und einem zweiten Objektiv, das derart zur Projektionsfläche und zum Halbleitersensor fällt, angeordnet ist, dass Licht von der Projektionsfläche auf das Halbleitersensorfeld abgebildet wird. Sie betrifft weiterhin einen Adapter für eine Videokamera mit einem Adaptergehäuse und einem Objektiv, durch das Licht von einer aufzunehmenden Szenerie in das Adaptergehäuse einleitbar ist, und einer Projektionsfläche, die derart zum Objektiv angeordnet ist, dass durch das Objektiv eingeleitetes Licht auf die Projektionsfläche abgebildet wird. Eine derartige Videokamera und ein derartiger Adapter für eine Videokamera sind bekannt aus der EP 0 950 912 A2.

Die Erfindung befasst sich mit dem Problem der Tiefenschärfe. Seit es Videokameras gibt, werden Versuche unternommen, den "Look" eines Celluloid-Filmbildes zu kopieren. Dies gelingt aus folgenden drei Gründen nicht: Erstens ist die Auflösung von Film gegenwärtig immer noch sehr viel größer als die von Video. Zweitens ist der Kontrastumfang von Film wesentlich größer, und drittens ist die Tiefenschärfe eines 35 mm-Films deutlich geringer.

Der letztgenannte Grund mag für einen Laien eher wie ein Nachteil klingen, ist aber tatsächlich für den Profi genau das Gegenteil. Geringe Tiefenschärfe ist insbesondere bei der Herstellung von Kinofilmen von außerordentlicher Bedeutung. Das, was als besonders "filmisch" empfunden wird, nämlich eine schnell abfallende Tiefenschärfe, ist jedoch keineswegs typisch für alle existierenden Filmformate. "Super 8" oder "16 mm" sind - aufgrund der kleinen Abbildungsfläche - im ungünstigsten Fall ähnlich scharf wie ein Video. Jedoch werden Filme auf diesen Formaten auch noch nicht als besonders "filmisch" empfunden. Die Alltagswahrnehmung dessen, was "filmisch" ist, ist geprägt durch den ständigen Konsum von Materialen aus dem Bereich des 35 mm-Films.: Sämtliche Hollywoodfilme, alle Werbefilme, alle großen Videoclips entstehen immer noch ausschließlich auf diesem Format. Und dieser Konsum hat die Wahrnehmung geprägt. Beispielsweise wird ein auf 16 mm-Film gedrehter "Tatort" von kaum jemandem als besonders "filmisch" empfunden werden. Daß die auf 35mm-Film gedrehten "X-Files" irgendwie anders aussehen, bemerkt jeder Laie.

Wie bereits angedeutet, wird die Tiefenschärfe entscheidend beeinflusst von der Größe der Aufzeichnungsfläche. Ein herkömmliches 35 mm Filmnegativ ist im Vergleich zum Aufzeichnungschip einer Videokamera riesengroß. Diese Größe macht es möglich, dass die Tiefenschärfe sinkt. Dem Videofilmer hingegen gelingt es aufgrund der kleinen Fläche des Chips nicht, eine gewünschte Tiefenunschärfe zu erzielen.

Im Hinblick darauf, dass die Auflösung und der Kontrast von Videokameras beinahe täglich verbessert werden, ist die Tiefenunschärfe gegenwärtig das ungelöste Problem von Videokameras. Von der Firma Canon ist bekannt, Fotooptiken mittels eines Adapters vor eine Videokamera zu setzen. Dies resultiert jedoch darin, dass der im Hinblick auf die Filmoptik viel zu kleine Chip nur einen Ausschnitt des projizierten Bildes zeigt. Der Effekt, der dadurch entsteht, ist der, dass sich die Brennweite der Optik zu verlängern scheint. Eine Optik, die bezogen auf Kameras ein Normalobjektiv darstellt, wird auf einer Videokamera zu einem Teleobjektiv.

Um auf den kleinen Chip der Videokamera den gleichen Bildausschnitt zu bekommen, der mit einer Filmkamera mit einer beliebigen Optik erzielt wird, muss eine ungleich viel weitwinkligere Optik verwendet werden (ungefähr um das 7-fache). Dies ist zwar möglich, jedoch geht dadurch die erzielte Tiefenunschärfe verloren, da diese untrennbar mit der tatsächlichen Länge der Brennweite verbunden ist. Es gilt nämlich: Je kleiner das abgebildete Bild und je kürzer die Brennweite der Optik, die benötigt wird, um einen bestimmten Bildausschnitt darauf abzubilden, umso größer ist die Tiefenschärfe.

Bei dem in der eingangs erwähnten EP 0 950 912 A2 beschriebenen Abbildungsapparat verursachen Verunreinigungen auf der Projektionsfläche unerwünschte Abbildungen auf dem Bildaufnahmesensor.

Der vorliegenden Erfindung liegt deshalb die Aufgabe zugrunde, eine Videokamera der eingangs genannten Art derart weiterzubilden, dass die Abbildungseigenschaften gegenüber der aus dem Stand der Technik bekannten Videokamera verbessert sind.

Diese Aufgabe wird erfindungsgemäß gelöst durch eine Videokamera mit den Merkmalen von Patentanspruch 1.

Die Projektionsfläche ist gekapselt, da nämlich Staub und kleine Verunreinigungen, die sich auf der Projektionsfläche absetzen, bei der vorliegenden Erfindung genau auf der Schärfeebene liegen und folglich immer scharf auf das Halbleitersensorfeld abgebildet würden. Zu diesem Zweck eignet sich besonders klares Filterglas, das vor und hinter der Projektionsfläche angeordnet ist. Durch geeignete Wahl des Abstands von der Projektionsfläche kann sichergestellt werden, daß Verunreinigungen, die sich auf dem Filterglas absetzen, nicht mehr störend auf das Halbleitersensorfeld abgebildet werden.

Durch die zweistufige Abbildung, bei der vorzugsweise das erste Objektiv eine Filmoptik ist und das zweite Objektiv das Objektiv einer herkömmlichen Videokamera sein kann, kann wunschgemäß eine geringe Tiefenschärfe erzielt werden.

Erst durch diese Maßnahme wird ermöglicht, dass Videokameras im Bereich der Filmindustrie nicht nur zu Prüf- und Kontrollzwecken, das heißt als Hilfsmittel, eingesetzt werden, sondern zukünftig die Aufgaben übernehmen, die bisher von Filmkameras wahrgenommen wurden. Die Erfindung stellt die Kombination aus Elementen des Bereichs der Filmtechnik und Elementen des Videobereichs zur Verfügung: die Verwendung billigen und wiederholt verwendbaren Aufzeichnungsmediums, sowie das niedrigen Gewichts von der Videokamera, die Auswahl verschiedenster in der Filmindustrie gebräuchlicher Optiken bei gleichzeitiger Erzielung der gewünschten Tiefenunschärfe von der Filmkamera. Es handelt sich quasi um eine synergetische Zusammenführung der bislang getrennten Formate Film und Video.

Bei einer bevorzugten Ausführungsform ist die Projektionsfläche eine matte Fläche, insbesondere eine matte Glasscheibe. Sofern die Fläche transparent ausgebildet ist, eröffnet dies die Möglichkeit, das erste Objektiv derart anzuordnen, dass Licht von der aufzunehmenden Szenerie auf die Vorderseite der Projektionsfläche abgebildet wird, und das zweite Objektiv derart angeordnet ist, daß Licht von der Rückseite der Projektionsfläche auf das Halbleitersensorfeld abgebildet wird. Dies resultiert in einer kompakten Bauweise der Videokamera und einer Minimierung der optischen Elemente. Letzteres ist deshalb besonders bevorzugt, da durch jedes optische Element Verluste, beispielsweise in der Lichtintensität oder der Schärfe, eingeführt werden.

Für das erste Objektiv kommen bevorzugt Filmoptiken zum Einsatz, insbesondere Optiken aus dem 35 mm Bereich, wobei dann die Projektionsfläche bevorzugt rechteckig ist und eine Breite von ca. 25 mm aufweist. Durch diese Anpassung der Projektionsfläche an die für das erste Objektiv verwendeten Optik wird eine optimaler Erhalt der durch das Filmobjektiv erzielten Tiefenunschärfe ermöglicht. Eine Projektionsfläche mit einer Breite von ca. 25 mm ist im Vergleich zur Fläche eines herkömmlichen CCD-Chips einer Videokamera geradezu riesig. Hinsichtlich des zweiten Objektivs liegt die wesentliche Anforderung darin, dass es derart ausgelegt sein muss, das Licht von der Projektionsfläche scharf auf das Halbleitersensorfeld abzubilden. Da die eigentliche optische Arbeit bereits von dem ersten Objektiv erledigt wird, kann deshalb das zweite Objektiv im Vergleich zum ersten Objektiv deutlich weniger hochwertig sein. Insbesondere Kann das zweite Objektiv im Hinblick auf seine eigentliche Aufgabe optimiert sein, nämlich die scharfe Abbildung des Bilds auf der Projektionsfläche auf das Halbleitersensorfeld. Aufgrund dieser Spezialisierung des Aufgabenbereichs des zweiten Objektivs lassen sich diese kostengünstig realisieren.

Üblicherweise umfasst die Videokamera einen Aufzeichnungsmechanismus, mit dem das Halbleitersensorfeld ausgelesen werden kann und die ausgelesenen Daten gespeichert werden können.

Der vorliegenden Erfindung liegt weiterhin die Aufgabe zugrunde, einen gattungsgemäßen Adapter derart weiterzubilden, dass die Abbildungseigenschaften gegenüber dem aus dem Stand der Technik bekannten Adapter verbessert sind.

Diese Aufgabe wird gelöst durch einen Adapter mit den Merkmalen von Patentanspruch 8.

Durch die Kapselung lässt sich die Abbildung von Verunreinigungen auf der Projektionsfläche auf das Halbleitersensorfeld verhindern.

Wie bereits oben festgestellt wurde, können die Ansprüche an das zweite Objektiv relativ gering sein, so dass hierfür herkömmliche Videoobjektive eingesetzt werden können. Bevorzugt ist der Adapter so ausgebildet, dass sein Objektiv einfach gewechselt werden kann. Damit wird erreicht, dass eine günstige Videokamera durch Verwendung eines derartigen Adapters zu einem hochwertigen Aufzeichnungsgerät mutiert, wobei die Ergebnisse der Aufzeichnung hinsichtlich der Tiefenschärfe mit der von bekannten Filmkameras vergleichbar ist. Für den Fall, daß mit dem Normalobjektiv der herkömmlichen Videokamera die Projektionsfläche nicht scharf auf das Halbleitersensorfeld abgebildet werden kann, kann es nötig sein, dieses durch ein Makroobjektiv zu ersetzen. Alternativ kann eine Makrowirkung erzielt werden, indem dem Normalobjektiv ein weiteres Objektiv vorgeschaltet wird. Der Begriff Objektiv der Videokamera, wie er in der in der Anmeldung verwendet wird, soll auch diese Kombination umfassen.

Bevorzugt weist die Projektionsfläche keinerlei Markierungen oder Einzeichnungen auf. Wie bereits oben im Zusammenhang mit der erfindungsgemäßen Videokamera ausgeführt, ist die Projektionsfläche bevorzugt eine matte Fläche, insbesondere eine matte Glasscheibe, so dass das Objektiv des Adapters derart angeordnet werden kann, das Licht von der aufzunehmenden Szenerie auf die Vorderseite der Projektionsfläche abgebildet wird, wobei die Mittel zum Befestigen des Adapters an der Videokamera derart ausgelegt sind, dass das Objektiv der Videokamera auf die Rückseite der Projektionsfläche richtbar ist.

Selbstverständlich kommen für die Objektive des Adapters sämtliche aus der Filmindustrie bekannten Formate in Betracht, wobei jedoch im Hinblick auf die überreiche Auswahl "35 mm-Optiken", d.h. Optiken zur Abbildung auf 35 mm breiten Filmstreifen, unterschiedlichster Brennweiten bevorzugt sind.

Wie bereits in Zusammenhang mit der erfindungsgemäßen Videokamera ausgeführt wurde, ist die Projektionsfläche bevorzugt zwischen zwei transparenten Scheiben gekapselt, um die Abbildung von Verunreinigungen auf der Projektionsfläche auf das Halbleitersensorfeld zu verhindern.

Weitere vorteilhafte Ausführungsformen ergeben sich aus den Unteransprüchen.

Im Nachfolgenden wird ein Ausführungsbeispiel unter Hinweis auf die beigefügte Zeichnung näher beschrieben, die in geschnittener schematischer Darstellung den Aufbau einer erfindungsgemäßen Videokamera zeigt.

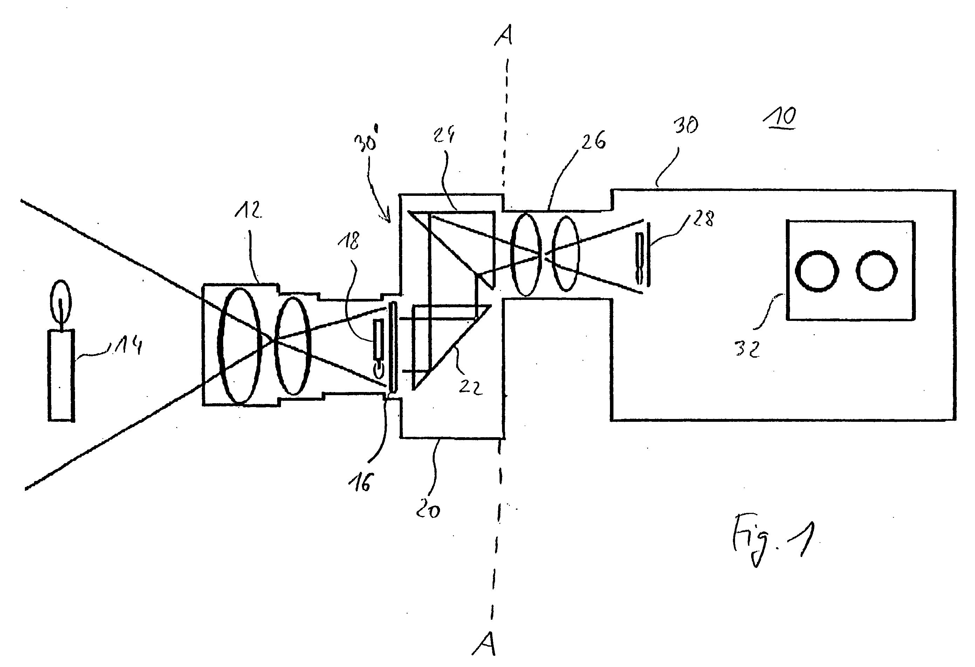

Die in Figur 1 dargestellte erfindungsgemäße Videokamera 10 umfasst ein erstes Objektiv 12, mit dem eine aufzuzeichnende Szenerie 14 scharf auf einer matten Glasscheibe 16 abgebildet werden kann. Die matte Glasscheibe 16 weist keinerlei Markierungen oder Einzeichnungen auf. Ihre Größe ist abgestimmt auf das verwendete Objektiv 12. Beispielsweise hat die matte Glasscheibe 16 bei Verwendung einer 35 mm-Optik als Objektiv 12 eine Breite von 35 mm. Im Hinblick auf die Größe der auf der matten Glasscheibe 16 durch das erste Objektiv 12 bewirkten Abbildung, siehe unten, sollte diese im Falle der Verwendung von 35mm-Optiken bevorzugt mindestens 25 mm x 19 mm groß sein. Dieses erste Objektiv 12 kann jedoch eine aus der Filmindustrie bekannte Optik beliebigen Formats sein. Wie bereits erwähnt, sind jedoch aufgrund der großen Auswahl jedoch 35 mm-Optiken bevorzugt. Die matte Glasscheibe 16 weist eine Vorderseite auf, die ein Bild 18 der abzubildenden Szenerie 14 zeigt. Das Bild 18 ist gegenüber dem Original auf dem Kopf. Das Licht, das durch die matte Glasfläche 16 hindurchtritt, wird durch einen Prismenblock 20 geleitet, um das auf dem Kopf stehende, spiegelverkehrte Bild 18 wieder aufzurichten. In Fig. 1 sind schematisch ein erstes 22 und ein zweites Prisma 24 im Prismenblock angedeutet. Für den Fachmann ist offensichtlich, daß die Aufgabe des Prismenblocks 20 auch durch andere Konstellationen, vor allem auch auf elektronischem Wege bewirkt werden kann.

An Stelle der hier gezeigten optischen Aufrichtung des Bildes 18 durch den Prismenblock 20 kommt ebenfalls eine Aufrichtung auf elektronischen Wege in Betracht. Die letztgenannte Maßnahme ist bevorzugt, da das Hindurchtreten des Lichts durch die matte Glasscheibe sowie die Prismen 22 und 24 mit einem Helligkeits- und Qualitätsverlust einhergeht.

Das das Prisma 24 verlassende Licht durchläuft ein zweites Objektiv 26, wodurch das Original 14 letztendlich wiederum auf dem Kopf stehend auf einem Halbleitersensorfeld 28, beispielsweise einem CCD (charge coupled device) abgebildet wird. In dem Gehäuse 30 der Videokamera ist weiterhin, wie in Figur 1 schematisch dargestellt, ein Aufzeichnungsmechanismus 32 untergebracht, mit dem das Halbleitersensorfeld 28 ausgelesen werden kann und die ausgelesenen Daten gespeichert werden können.

Im Hinblick auf den erfindungsgemäßen Adapter umfasst der Adapter die Elemente, die links der Linie AA in Figur 1 dargestellt sind, wobei wiederum besonders bevorzugt der Prismenblock 20 entfallen kann. Rechts von der Linie AA in Figur 1 ist im Hinblick auf den erfindungsgemäßen Adapter eine handelsübliche Videokamera dargestellt. Das Objektiv 12, die Projektionsfläche 16 sowie der Prismenblock 20 sind in einem Adaptergehäuse 30' untergebracht.

Bei einer nicht dargestellten Ausführungsform hat die Projektionsfläche eine flächig ausgebildete Vorderseite, während die Rückseite gewölbt ist. Diese Wölbung wirkt als optische Linse. Im Sinne der Erfindung ist bei dieser Ausführung diese optische Linse als Teil des zweiten Objektives zu betrachten, mit dem das Bild auf einer - vorliegend fiktiv anzunehmenden - flächig ausgebildeten Rückseite der Projektionsfläche auf das Halbleitersensorfeld abgebildet wird.

Bevorzugt ist weiterhin die Projektionsfläche zwischen einem vor und einem hinter der Projektionsfläche angeordneten klaren Filterglas gekapselt.

## Patentansprüche

1. Videokamera mit
- einem Kameragehäuse (30);
- einem ersten Objektiv (12), durch das Licht von einer aufzunehmenden Szenerie (14) in das Kameragehäuse (30) einleitbar ist;
- einem Halbleitersensorfeld (28), auf dem Licht von der aufzunehmenden Szenerie (14) kumulierbar ist,
- eine Projektionsfläche (16), die derart zum ersten Objektiv (12) angeordnet ist, daß durch das erste Objektiv (12) eingeleitetes Licht auf die Projektionsfläche (16) abgebildet wird; und
- einem zweiten Objektiv (26), das derart zur Projektionsfläche (16) und zum Halbleitersensorfeld (28) angeordnet ist, daß Licht von der Projektionsfläche (16) auf das Halbleitersensorfeld (28) abgebildet wird.
**dadurch gekennzeichnet,**
**dass** die Projektionsfläche (16) gekapselt ist und daß die dem Halbleitersensorfeld (28) zugewandte Oberfläche der transparenten Kapselung soweit von der Projektionsfläche entfernt ist, daß Verunreinigungen auf der Kapselung nicht scharf auf das Halbleitersensorfeld abgebildet werden.

2. Videokamera nach Anspruch 1,
**dadurch gekennzeichnet,**
**daß** die Projektionsfläche (16) eine matte Fläche, insbesondere eine matte Glasscheibe ist.

3. Videokamera nach Anspruch 1 oder 2,
**dadurch gekennzeichnet,**
**daß** das erste Objektiv (12) eine 35mm-Optik ist und die Projektionsfläche (16) rechteckig ist und eine Breite in einem Bereich von 20 mm bis 35 mm, bevorzugt 25 mm, aufweist.

4. Videokamera nach einem der vorhergehenden Ansprüche,
**dadurch gekennzeichnet,**
**daß** das zweite Objektiv (26) ausgelegt ist, Licht von der Projektionsfläche (16) scharf auf das Halbleitersensorfeld (28) abzubilden.

5. Videokamera nach einem der vorhergehenden Ansprüche,
**dadurch gekennzeichnet,**
**daß** die Videokamera (10) einen Aufzeichungsmechanismus (32) umfaßt, mit dem das Halbleitersensorfeld (28) ausgelesen werden kann und die ausgelesenen Daten gespeichert werden können.

6. Videokamera nach einem der vorhergehenden Ansprüche,
**dadurch gekennzeichnet,**
**daß** die Projektionsfläche (16) eine Vorder- und eine Rückseite aufweist und das erste Objektiv (12) derart angeordnet ist, daß Licht von der aufzunehmenden Szenerie (14) auf die Vorderseite der Projektionsfläche (16) abgebildet wird, und
das zweite Objektiv (26) derart angeordnet ist, daß Licht von der Rückseite der Projektionsfläche (16) auf das Halbleitersensorfeld (28) abgebildet wird.

7. Videokamera nach einem der vorhergehenden Ansprüche,
**dadurch gekennzeichnet,**
**daß** die Projektionsfläche gekapselt ist durch eine vor und hinter der Projektionsfläche angeordnete transparente Scheibe.

8. Adapter für eine Videokamera mit
- einem Adaptergehäuse (30');
- einem Objektiv (12), durch das Licht von einer aufzunehmenden Szenerie (14) in das Adaptergehäuse (30') einleitbar ist; und
- einer Projektionsfläche (16), die derart zum Objektiv (12) angeordnet ist, daß durch das Objektiv (12) eingeleitetes Licht auf die Projektionsfläche (16) abgebildet wird;
wobei das Adaptergehäuse (30') Mittel zum Befestigen des Adapters an der Videokamera aufweist derart, daß das Objektiv (26) der Videokamera auf die Projektionsfläche (16) richtbar ist, so daß mit der Videokamera das Bild auf der Projektionsfläche (16) aufgezeichnet werden kann,
**dadurch gekennzeichnet**
**dass** die Projektionsfläche (16) gekapselt ist und daß die der Projektionsfläche abgewandte Oberfläche der transparenten Kapselung soweit von der Projektionsfläche entfernt ist, daß Verunreinigungen auf der Kapselung nicht scharf von der Videokamera aufgezeichnet werden.

9. Adapter nach Anspruch 8,
**dadurch gekennzeichnet,**
**daß** die Projektionsfläche (16) keinerlei Markierungen oder Einzeichnungen aufweist.

10. Adapter nach einem der Ansprüche 8 oder 9,
**dadurch gekennzeichnet,**
**daß** die Projektionsfläche (16) eine matte Fläche, insbesondere eine matte Glasscheibe ist.

11. Adapter nach einem der Ansprüche 8 bis 10,
**dadurch gekennzeichnet,**
**daß** das Objektiv (12) des Adapters eine 35mm-Optik ist und die Projektionsfläche (16) rechteckig ist und eine Breite in einem Bereich von 20 mm bis 35 mm, bevorzugt 25 mm, aufweist.

12. Adapter nach einem der Ansprüche 8 bis 11,
**dadurch gekennzeichnet,**
**daß** die Projektionsfläche (16) eine Vorder- und eine Rückseite aufweist und das Objektiv (12) des Adapters derart angeordnet ist, daß Licht von der aufzunehmenden Szenerie (14) auf die Vorderseite der Projektionsfläche (16) abgebildet wird, und die Mittel zum Befestigen des Adapters an der Videokamera derart ausgelegt sind, daß das Objektiv (26) der Videokamera auf die Rückseite der Projektionsfläche (16) richtbar ist.

13. Adapter nach einem der Ansprüche 8 bis 12,
**dadurch gekennzeichnet,**
**daß** die Projektionsfläche gekapselt ist durch eine vor und hinter der Projektionsfläche angeordnete transparente Scheibe.

## Claims

1. Video camera comprising
- a camera housing (30);
- a first objective (12), through which light from a scene (14) to be picked up is guidable into the camera housing (30);
- a semiconductor sensor field (28), on which light from the scene (14) to be picked up is able to be cumulated,
- a projection area (16) disposed with respect to the first objective (12) such that light introduced through the first objective (12) is imaged onto the projection area (16); and
- a second objective (26) disposed with respect to the projection area (16) and to the semiconductor sensor field (28) such that light from the projection area (16) is imaged onto the semiconductor sensor field (28),
**characterized in that**
the projection area (16) is encapsulated and that the surface of the transparent encapsulation turned towards the semiconductor sensor field (28) is located at a distance from the projection area so that impurities on the encapsulation are not imaged onto the semiconductor sensor field in a well-focused way.

2. Video camera according to claim 1,
**characterized in that**
the projection area (16) is a mat surface, especially a mat glass pane.

3. Video camera according to claim 1 or 2,
**characterized in that**
the first objective (12) is a 35 mm optics and the projection area (16) is rectangular and has a width in a range of 20 mm to 35 mm, preferably 25 mm.

4. Video camera according to any of the preceding claims,
**characterized in that**
the second objective (26) is adapted to image light from the projection area (16) well-focused onto the semiconductor sensor field (28).

5. Video camera according to any of the preceding claims,
**characterized in that**
the video camera (10) includes a recording mechanism (32), by which the semiconductor sensor field (28) can be read out and the read out data can be stored.

6. Video camera according to any of the preceding claims,
**characterized in that**
the projection area (16) has a front and a back side and the first objective (12) is disposed such that light from the scene (14) to be picked up is' imaged onto the front side of the projection area (16), and the second objective (26) is disposed such that light from the backside of the projection area (16) is imaged onto the semiconductor sensor field (28).

7. Video camera according to any of the preceding claims,
**characterized in that**
the projection area is encapsulated by a transparent pane disposed in front of and behind the projection area.

8. Adapter for a video camera, comprising
- an adapter housing (30')
- an objective (12), through which light from a scene (14) to be picked up is guidable into the adapter housing (30'); and
- a projection area (16) disposed with respect to the objective (12) such that light guided through the objective (12) is imaged onto the projection area (16);
wherein the adapter housing (30') has means for attaching the adapter to the video camera such that the objective (26) of the video camera is able to be directed to the projection area (16), so that the image on the projection area (16) can be recorded by the video camera,
**characterized in that**
the projection area (16) is encapsulated and that the surface of the transparent encapsulation turned away from the projection area is located at a distance from the projection area so that impurities on the encapsulation are not recorded by the video camera in a well-focused way.

9. Adapter according to claim 8,
**characterized in that**
the projection area (16) has no marks or markings.

10. Adapter according to any one of claim 8 or 9,
**characterized in that**
the projection area (16) is a mat surface, especially a mat glass pane.

11. Adapter according to any one of claim 8 to 10,
**characterized in that**
the objective (12) of the adapter is a 35 mm optics and the projection area (16) is rectangular and has a width in a range of 20 mm to 35 mm, preferably 25 mm.

12. Adapter according to any one of claim 8 to 11,
**characterized in that**
the projection area (16) has a front and a back side and the objective (12) of the adapter is disposed such that light from the scene (14) to be picked up is imaged onto the front side of the projection area (16), and the means for attaching the adapter to the video camera is adapted such that the objective (26) of the video camera is able to be directed to the backside of the projection area (16).

13. Adapter according to any one of claim 8 to 12,
**characterized in that**
the projection area is encapsulated by a transparent pane disposed in front of and behind the projection area.

## Revendications

1. Caméra vidéo comportant:
- un boîtier de caméra (30) ;
- un premier objectif (12) à travers lequel la lumière d'une scène (14) à tourner peut être introduite dans le boîtier de la caméra (30);
- une surface sensible à semi-conducteur (28) sur laquelle la lumière de la scène à tourner (14) peut être cumulée;
- une surface de projection (16) disposée par rapport au premier objectif (12) de sorte que la lumière introduite par le premier objectif (12) est représentée sur la surface de projection (16); et
- un deuxième objectif (26) disposé par rapport à la surface de projection (16) et à la surface sensible à semi-conducteur (28) de sorte que la lumière de la surface de projection (16) est représentée sur la surface sensible à semi-conducteur (28),
**caractérisé en ce que**
la surface de projection (16) est blindée et la surface du blindage transparent tournée vers la surface sensible à semi-conducteur (28) est si distante de la surface de projection que des impuretés présentes sur le blindage ne sont pas représentés avec netteté sur la surface sensible à semi-conducteur.

2. Caméra vidéo selon la revendication 1, **caractérisée en ce que** la surface de projection (16) est une surface mate, notamment un écran de verre mat.

3. Caméra vidéo selon la revendication 1 ou 2, **caractérisée en ce que** le premier objectif (12) est une optique de 35 mm et la surface de projection (16) est rectangulaire, ayant une largeur comprise entre 20 mm et 35 mm, de préférence de 25 mm.

4. Caméra vidéo selon l'une quelconque des revendications précédentes, **caractérisée en ce que** le deuxième objectif (26) a été dimensionné de sorte que la lumière de la surface de projection (16) soit représentée avec une netteté irréprochable sur la surface sensible à semi-conducteur (28).

5. Caméra vidéo selon l'une queconque des revendications précédentes, **caractérisée en ce que** la caméra vidéo (10) comprend un mécanisme d'enregistrement (32) permettant de lire la surface sensible à semi-conducteur (28) et de stocker les données extraites par lecture.

6. Caméra vidéo selon l'une quelconque des revendications précédentes, **caractérisée en ce que** la surface de projection (16) est munie d'une face avant et d'une face arrière et que le premier objectif (12) est disposé de sorte que la lumière de la scène à tourner (14) est représentée sur la face avant de la surface de projection (16), le deuxième objectif (26) étant disposé de sorte que la lumière de la face arrière de la surface de projection (16) est représentée sur la surface sensible à semi-conducteur.

7. Caméra vidéo selon l'une quelconque des revendications précédentes, **caractérisée en ce que** la surface de projection est blindée par un écran en verre transparent disposé devant et derrière la surface de projection.

8. Adaptateur pour une caméra vidéo comprenant:
- un boîtier de l'adaptateur (30')
- un objectif (12) à travers lequel est introduite la lumière d'une scène à tourner (14) vers le boîtier de l'adaptateur (30'); et
- une surface de projection (16) disposée par rapport à l'objectif (12) de manière à ce que la lumière introduite par l'objectif (12) soit représentée sur la surface de projection (16);
le boîtier de l'adaptateur (30') étant muni de moyens de fixation de l'adaptateur sur la caméra vidéo de sorte que l'objectif (26) de la caméra vidéo puisse être dirigé sur la surface de projection (16) et la caméra vidéo puisse enregistrer l'image projetée sur la surface de projection (16),
**caractérisé en ce que** la surface de projection (16) est blindée et la surface du blindage transparent non tournée vers la surface de projection est si distante de la surface de projection que les impuretés présentes sur le blindage ne sont pas enregistrées de manière nette par la caméra.

9. Adaptateur selon la revendication 8, **caractérisé en ce que** la surface de projection (10) est exempte de tous marquages ou inscriptions.

10. Adaptateur selon l'une des revendications 8 ou 9, **caractérisé en ce que** la surface de projection (16) est une surface mate, tout particulièrement un écran de verre transparent.

11. Adaptateur selon une des revendications 8 et 10 **caractérisé en ce que** l'objectif (12) de l'adaptateur est une optique de 35 mm et la surface de projection (16) est rectangulaire et a une largeur comprise entre 20 mm et 35 mm, de préférence 25 mm.

12. Adaptateur selon une des revendications 8 à 11 **caractérisé en ce que** la surface de projection (16) est munie d'une face arrière et d'une face avant et l'objectif (12) de l'adaptateur est disposé de manière à représenter la lumière de la scène à tourner (14) sur la face avant de la surface de projection (16) et les moyens de fixation de l'adaptateur sur la caméra vidéo sont dimensionnés de sorte que l'objectif (26) de la caméra vidéo peut être dirigé sur la face arrière de la surface de projection (16).

13. Adaptateur selon l'une des revendications 8 à 12, **caractérisé en ce que** la surface de projection est munie d'un blindage par un écran transparent mis en place avant et derrière la surface de projection.
